# EUROPEAN PATENT APPLICATION

(11) **EP 1 455 167 A1**
(43) Date of publication of application: **08.09.2004**
(21) Application number: 04004948.8
(22) Date of filing: 03.03.2004
(51) Int. Cl.: G01F 15/06, G01D 4/00

(54) **Device for the remote measurement and control of a gas supply and the corresponding method**

(30) Priority: 06.03.2003 IT pc20030010
(71) Applicant: AEM GAS S.p.a., 20122 Milano, MI (IT)
(72) Inventor: Bartolini, Alessandro, 20098 S. Giulianoi Milanese (MI) (IT)
(74) Representative: La Ciura, Salvatore

(57) **Abstract**

This invention relates to a device for the measurement and control of a gas supply, designed to be used mainly for domestic appliances, which said device is suitable to be connected to a central unit in order to transmit consumption data and a set of information about the consumption trend, such as the consumption trend during different time intervals. The device according to the invention comprises a measuring device that measures the quantity of gas supplied, which may be of the type currently used in residential premises, but associated with electronic systems able to detect the consumption trend, store it and generate corresponding signals which are transmitted at configurable intervals to a central server that processes them and outputs a set of information such as the consumption trend at various time intervals during the day or on various days of the week or month, thus allowing improvements in the management of the service and continuous monitoring by both the provider and the user. These characteristics enable the measuring device to be associated with local or remote control systems so that measures such as cutting off the gas supply can be taken in case of need. The gas meters currently in use comprise a device which measures the quantity of gas in transit and a display device which enables said quantity of gas to be read.

## Description

This invention relates to a device for the measurement and control of a gas supply, designed to be used mainly for domestic appliances, which said device is suitable to be connected to a central unit in order to transmit consumption data and a set of information about the consumption trend, such as the consumption trend during different time intervals.

In particular, the device according to the invention comprises a measuring device that measures the quantity of gas supplied, which may be of the type currently used in residential premises, but associated with electronic systems able to detect the consumption trend, store it and generate corresponding signals which are transmitted at configurable intervals to a central server that processes them and outputs a set of information such as the consumption trend at various time intervals during the day or on various days of the week or month, thus allowing improvements in the management of the service and continuous monitoring by both the provider and the user.

These characteristics enable the measuring device to be associated with local or remote control systems so that measures such as cutting off the gas supply can be taken in case of need.

The gas meters currently in use comprise a device which measures the quantity of gas in transit and a display device which enables said quantity of gas to be read.

These are analogue devices which comprise a measuring device of the rotary slide valve type, associated with a numerical display device, again of the mechanical type, which displays a figure corresponding to the quantity of gas supplied.

The first drawback of said devices is that the figure indicating the consumption must be read and communicated to the gas supply company by specific personnel so that the supply can be billed.

The second drawback is that said devices do not allow the consumption data to be processed in any way. In particular, they do not allow the consumption trend to be detected over time. Basically, known meters indicate how much is consumed but not how this consumption takes place. The third drawback is that said devices do not allow the gas supply company to perform remote operations on the installation, for example by cutting off the gas supply to meet the needs of the network or suspending the supply for contractual reasons.

The measuring device can be connected to a local gas leak detection system which manages the status of the solenoid valve.

The fourth drawback is that said devices are unable to interface with devices of other kinds present in the user's premises. Although this fact is not significant for the purpose of optimum management of the gas supply service, it is still a limitation in view of the fact that remote-controlled services designed to manage the entire home are becoming increasingly widespread.

The present applicant has filed patent application EP 1,221,683, claiming a method of remote management of a domestic supply.

The present invention eliminates the limitations of the known technique by offering a device as claimed in claim 1, designed to:
- detect the consumption trend over time, to enable the gas supply company to optimise the supply and possibly apply differentiated rates at different times of day;
- transmit the consumption data to the gas supply company in a fully automatic way;
- enable the gas supply to be cut off directly from the control unit if required due to the technical necessities of the distribution network or contractual reasons;
- perform an auto-diagnosis to ensure the correct operation of the equipment and the mechanical part (operation of mechanical meter);
- enable the supply to be cut off by associated gas leak detection systems.

The detailed description set out below, by way of example but not of limitation, relates to a preferred embodiment, from which the operation of the device according to the invention clearly appears.

The invention will now be described with reference to the annexed figures, wherein:
- figure 1 schematically illustrates a system of detection and data transmission with the device according to the invention;

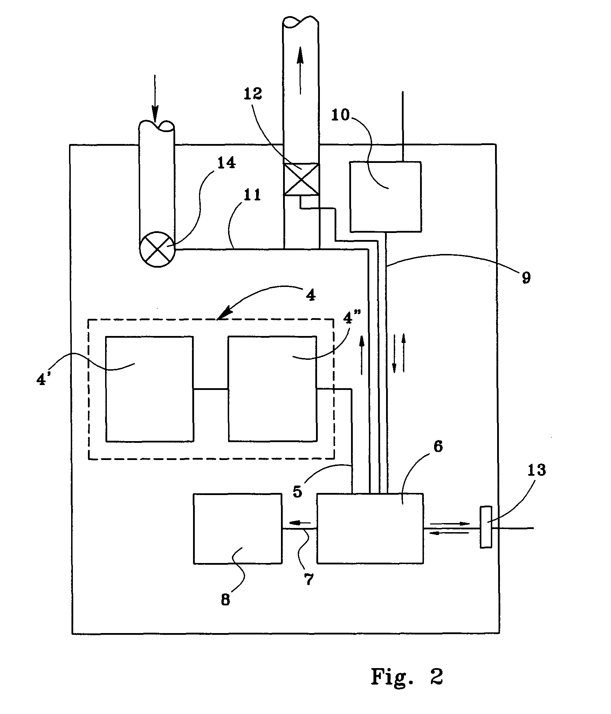

- figure 2 shows a block diagram of the electronic management and control devices in a measuring device according to the invention.

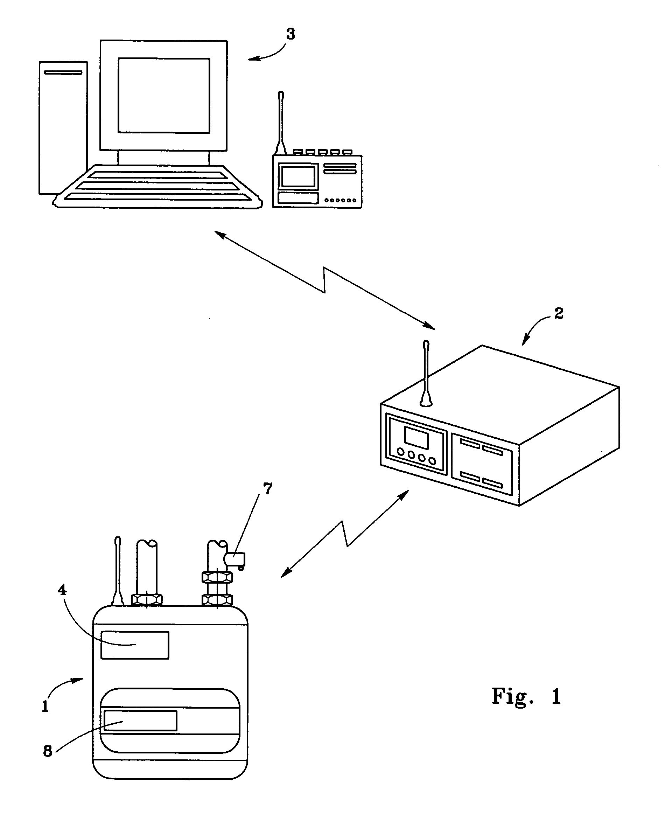

In fig. 1, no. (1) indicates a gas supply measurement and control device according to the invention, which is connected via radio to a gateway (2), said zone gateway being connected to a control unit (3).

The gateway may be an apartment or building gateway or a zone gateway, connected to lamp standards, for example, which communicates with the measuring device on one side and the service provider's control centre server on the other, via known technology, and in particular via wireless connections such as radio connections.

Device (1) can be connected to the zone gateway by a superheterodyne radio, for example, while the zone gateway can be connected to the control unit, for example, via a GSM, PTSN or Ethernet connection.

Said measuring device (1) comprises a meter (4), which constitutes the actual measuring apparatus, connected via wiring (5) to an electronic processor (6) equipped with an internal clock. Said meter (4) is interfaced with a gas flow measuring device of known type (4'), such as a slide-valve controlled meter, connected mechanically to a pulse generator (4"), also of known type, such as a rotary element connected to the slide valve, which said pulse generator is fitted with a magnetic element that passes close to a sensor which generates a pulse on each passage. Said pulse generator (4") is connected via wiring (5) to an electronic processor (6) which, in turn, is connected via wiring (7) to a display (8), via wiring (9) to a radio transceiver (10), and via wiring (11) to a solenoid valve (12).

The processor (6) is then connected to a serial port (13), such as type RS 232 or 485.

The basic function of the measuring device according to the invention is to meter gas consumption and apply the contractual tariff. Said contractual tariff may involve differentiated rates depending on the time of use.

Meter (4) emits pulses with a frequency proportional to the flow of gas; said pulses are detected by processor (6) which, being equipped with a clock, can establish the time of day to which the consumption measured relates, apply the contractual tariff and show it on display (8) to give the user constant information.

The consumption data are simultaneously sent via wiring (9) to radio (10), which sends them to zone gateway (2), which in turn transmits them to control unit (3).

Another function of processor (6) is to control solenoid valve (12), to which it is connected via wiring (11). The processor, via radio (10) and gateway (2), can receive signals from the control unit, which can order the closure of solenoid valve (12) for plant management or contractual reasons. The processor can also be given independent capacity to manage the solenoid valve if it is connected, via the serial port, to a gas leak detector (not shown in the figure); when a gas leak occurs, said detector generates a signal that is received and recognised by microprocessor (6), which activates the solenoid valve to cut off the gas supply and in turn generates a signal or message which is sent to the control unit.

Moreover, according to the invention, devices of known type, such as a small fan 14 associated with a transducer, also of known type, are integrated into the measuring device, and said fan detects the passage of gas independently of the operation of the other parts, such as meter (4) and solenoid valve (12).

The electronic control system checks that when signals are received from fan 14, indicating a gas flow, corresponding signals are also generated by meter (4) and by solenoid valve (12), which must be open.

The control unit only confirms that the measuring device is operating correctly if the signals originating from said three devices are simultaneous.

As will clearly appear from the description supplied, the measurement and control device according to the invention is not a simple meter but a "smart" system able to interact with other systems to provide a series of information required to improve the service and offer greater safety.

An expert in the field could devise various modifications and variations, all of which should be deemed to fall within the ambit of this invention.

## Claims

1. Device for the detection and control of a gas supply, **characterised in that** it includes a gas flow measurement device associated with means designed to transmit the gas consumption data detected to remote data receiving devices.

2. Device as claimed in claim 1, **characterised in that** it includes a processor designed to detect the gas consumption trend over time and transmit the corresponding data to a remote control unit.

3. Device as claimed in claim 1, **characterised in that** it includes valve means integrated into the gas measuring device, which said valve means are remote controlled.

4. Device as claimed in claim 3, **characterised in that** it includes means designed to generate a signal or message and transmit it to a remote control unit following the operation of said valve means.

5. Device as claimed in claim 1, **characterised in that** said means designed to transmit and receive signals are constituted by a radio transceiver.

6. Device as claimed in at least one of the preceding claims, **characterised in that** it includes a display device connected to the gas flow measurement device to display the gas consumption.

7. Device as claimed in claim 6, **characterised in that** said display device is connected to said processor so as to display the consumption trend over time.

8. Device as claimed in at least one of the preceding claims, **characterised in that** it includes a communication port between a processor installed inside said device and external equipment.

9. Device as claimed in at least one of the preceding claims, **characterised in that** it includes means designed to check the correct operation of all components of the measuring device.

10. Device as claimed in claim 9, **characterised in that** said means designed to check the correct operation of the measuring device are constituted by devices designed to detect the presence of a gas flow independently of the operation of the other components, and to generate a corresponding signal and send it to the electronic control system.

11. Device as claimed in claim 10, **characterised in that** said devices designed to detect the presence of a gas flow are constituted by a fan associated with an encoder.

12. Method for the measurement and control of a gas supply, **characterised in that** it includes the following stages:
• measurement of the quantity of gas delivered and generation of a corresponding signal;
• association of the measurement data with time data indicating the period when said measurement was taken, and generation of a corresponding signal;
• transmission of said signals to a remote control unit;
• processing of said data to obtain information about the supply at different times;
• display of the results obtained.

13. Method as claimed in claim 12, **characterised in that** it also includes the following stages:
• generation of signals by a flow detection device in the presence of a gas flow (14);
• check on the simultaneous presence of the corresponding signals generated by meter (4) and by the devices that control solenoid valve (12).
